# NEUE EUROPÄISCHE PATENTSCHRIFT

(11) **EP 1 412 217 B2**
(45) Veröffentlichungstag und Bekanntmachung des Hinweises auf die Entscheidung über den Einspruch: **23.01.2008**
(45) Hinweis auf die Patenterteilung: 23.03.2005
(21) Anmeldenummer: 02747235.6
(22) Anmeldetag: 27.06.2002
(51) Int. Cl.: B60K 37/02, B62D 1/28

(54) **ANZEIGEVORRICHTUNG FÜR FORTBEWEGUNGSMITTELBEZOGENES ASSISTENZ-/UNTERSTÜTZUNGSSYSTEM**
DISPLAY DEVICE FOR AN ASSISTANCE OR SUPPORT SYSTEM FOR TRANSPORT MEANS
DISPOSITIF D'AFFICHAGE DESTINE A UN SYSTEME D'ASSISTANCE/SOUTIEN DE MOYENS DE TRANSPORT

(30) Priorität: 29.06.2001 DE 10131478
(43) Veröffentlichungstag der Anmeldung: 28.04.2004
(73) Patentinhaber: ROBERT BOSCH GMBH, 70442 Stuttgart (DE)
(72) Erfinder: BRAEUCHLE, Goetz, 74934 Reichartshausen (DE); HEINEBRODT, Martin, 70176 Stuttgart (DE); BOECKER, Juergen, 70499 Stuttgart (DE)
(86) Internationale Anmeldenummer: PCT/DE2002/002329
(87) Internationale Veröffentlichungsnummer: WO 2003/004299

(56) Entgegenhaltungen:
- EP-A- 0 640 903
- DE-A- 19 539 799
- DE-A- 19 821 163
- DE-A- 19 841 706
- DE-A- 19 847 611
- DE-C- 19 622 752
- DE-C- 19 627 923
- DE-C- 19 632 929
- DE-C- 19 950 155
- US-A- 6 055 467
- "DISPLAYING ADAPTIVE CRUISE CONTROL AND FORWARD COLLISION WARNING INFORMATION TO AN AUTOMOBLILE DRIVER BY WAY OF A HEAD-UP DISPLAY" RESEARCH DISCLOSURE, KENNETH MASON PUBLICATIONS, HAMPSHIRE, GB, Nr. 400, 1. August 1997 (1997-08-01), Seiten 491-492, XP000726617 ISSN: 0374-4353
- Auszug aus DaimlerChrysler Betriebsanleitung 'Fahrsysteme' vom 28.04.00

## Beschreibung

### Technisches Gebiet

Die vorliegende Erfindung betrifft das Gebiet der fortbewegungsmittelbezogenen Assistenz-/Unterstützungssysteme.

### Stand der Technik

In modernen Fortbewegungsmitteln, wie beispielsweise in Kraftfahrzeugen, sind in zunehmendem Umfang Systeme vorgesehen, die den Führer des Fortbewegungsmittels bei der Führung des Fortbewegungsmittels unterstützen oder ihm spezielle Fahrmanöver erleichtern; derartige Systeme lassen sich unter den Oberbegriff der sogenannten ADAS (= "Advanced Driver Assistance Systems") fassen.

Eine Klasse der sich in Entwicklung befindlichen ADAS sind Systeme, die die Querführung des Fortbewegungsmittels betreffen. Der Funktionsumfang derartiger Systeme reicht von der Spurverlassenswarnung (= LDW = "Lane Departure Warning") über die Spurhalteunterstützung (= LKS = "Lane Keeping Support") bis zur autonomen Querführung. Für den Führer des Fortbewegungsmittels müssen derartige Systeme aber intuitiv versteh- und bedienbar sein, damit der Fahrer bei seiner Fahraufgabe effektiv entlastet wird.

Aus der EP 0 640 903 A1 ist ein Fahrerassistenzsystem für ein Fahrzeug bekannt. Hierbei ist eine Videokamera an dem Fahrzeug angeordnet, um Straßenmarkierungen zu erfassen. Das System kann über einen Schalter aktiviert werden, wobei das System nach dem Einschalten nach Fahrbahnmarkierungen sucht. Dem Benutzer wird hierbei angezeigt, ob der Suchprozeß läuft, ob Fahrbahnmarkierungen erkannt wurden oder ob ein Steuerungseingriff in Abhängigkeit von den erkannten Fahrbahnmarkierungen erfolgt, entsprechend eines Spurhalteunterstützung. Eine aktivierte Spurhalteunterstützung wird angezeigt.

### Darstellung der Erfindung: Aufgabe, Lösung, Vorteile

Ausgehend von den vorgenannten Nachteilen und Unzulänglichkeiten liegt der vorliegenden Erfindung die Aufgabe zugrunde, die Akzeptanz der vorstehend diskutierten fortbewegungsmittelbezogenen Assistenz/Unterstützungssysteme zu steigern, beispielsweise indem das Verhalten derartiger Systeme durch den Führer des Fortbewegungsmittels jederzeit ohne weiteres einschätzbar ist.

Diese Aufgabe wird gemäß der Lehre der vorliegenden Erfindung durch eine mindestens einem Fortbewegungsmittel, insbesondere mindestens einem Kraftfahrzeug, zugeordnete Vorrichtung, für das insbesondere intuitive Erfassen der Betriebs- und/oder Systemzustände von auf die Querführung des Fortbewegungsmittels bezogenen Assistenz/Unterstützungssystemen mit den im Anspruch 1 genannten Merkmalen gelöst. Vorteilhafte Ausgestaltungen und zweckmäßige Weiterbildungen der vorliegenden Erfindung sind in den Unteransprüchen gekennzeichnet.

Mithin ist der Kern der vorliegenden Erfindung sowohl in der Definition anzuzeigender Betriebs-/Systemzustände als auch in einem Konzept zur Veranschaulichung dieser Betriebs-/Systemzustände zu sehen, wodurch dem Führer des Fortbewegungsmittels eine anschauliche und intuitiv erfassbare Darstellung des jeweiligen Betriebs-/Systemzustands des Assistenz-/Unterstützungssystems bereitgestellt wird; nicht zuletzt hierdurch erfährt der Führer des Fortbewegungsmittels eine hilfreiche und schnell wirkende Unterstützung beim Erlernen des Systemverhaltens.

Hierzu sind ein oder mehrere Anzeigeelemente (beispielsweise ein bis drei Anzeigeelemente für die Systemzustände im einzelnen) vorgesehen, mittels derer die folgenden Systemzustände für die Querführungsunterstützung angezeigt werden können:
- ausgeschaltet;
- eingeschaltet, passiv (= keine Assistenzfunktion aktiv);
- eingeschaltet, aktiv warnend (= lediglich LDW aktiv);
- eingeschaltet, aktiv regelnd (= lediglich LKS aktiv); und
- eingeschaltet, sowohl aktiv warnend als auch aktiv regelnd (= sowohl LDW als auch LKS aktiv).

Es ist vorgesehen,
- daß der aktiv warnende Zustand durch mindestens eine Spurverlassenswarnung (= LDW = "Lane Departure Warning") anzeigbar ist,
- daß der aktiv regelnde Zustand durch mindestens eine Spurhalteunterstützung (= LKS = "Lane Keeping Support") anzeigbar ist und
- daß der aktiv warnende und aktiv regelnde Zustand sowohl durch mindestens eine Spurverlassenswarnung als auch durch mindestens eine Spurhalteunterstützung anzeigbar ist.

Gemäß einer bevorzugten Ausgestaltungsform der vorliegenden Erfindung kann im eingeschalteten Zustand permanent angezeigt werden, ob das Assistenz-/Unterstützungssystem einen linken Rand (bzw. eine linke Fahrbahnmarkierung) und/oder einen rechten Rand (bzw. eine rechte Fahrbahnmarkierung) detektiert hat; dies bedeutet mit anderen Worten, daß zur Information des Führers des Fortbewegungsmittels in erfindungswesentlicher Weise eine Anzeige erkannter Ränder bzw. Markierungen auch im passiven Zustand möglich ist.

Durch diese vorteilhafte technische Maßnahme, die zweckmäßigerweise auch eine Trennung nach Hauptsymbol und Fahrbahnrand umfassen kann, wird der Führer des Fortbewegungsmittels darin unterstützt, sich mit den Möglichkeiten und mit den Grenzen des Assistenz/Unterstützungssystems möglichst rasch vertraut zu machen, was wiederum der Verkehrssicherheit dienlich ist.

Wenn die vorliegende Vorrichtung in besonders erfinderischer Weise weitergebildet werden soll, so können insgesamt bis zu fünf Anzeigeelemente vorgesehen sein, die die folgenden Bedeutungen bzw. Funktionen haben:
(a) Assistenz-/Unterstützungssystem ist eingeschaltet;
(b) linke Markierung (bzw. linker Fahrbahnrand) wird detektiert;
(c) rechte Markierung (bzw. rechter Fahrbahnrand) wird detektiert;
(d) Spurverlassenswarnung (= LDW = "Lane Departure Warning") ist aktiv;
(e) Spurhalteunterstützung (= LKS = "Lane Keeping Support'') ist aktiv.

Die Anzeige der vorstehend definierten Systemzustände der Querführungsunterstützung erfolgt in bevorzugter Weise im wesentlichen durch die Anzeigeelemente (a), (d) und (e); hierbei können zwei oder alle drei dieser Anzeigeelemente (a), (d) und (e) auch durch ein einziges Anzeigeelement dargestellt werden, wobei die unterschiedlichen Systemzustände der Querführungsunterstützung in erfindungswesentlicher Weise auch durch wechselnde Farbgebungen implementiert bzw. kodiert werden können.

Wenn die Anzeigeelemente (a), (d) und (e) hingegen in vorteilhafter Weise separat realisiert werden, dann besteht für jedes dieser Anzeigeelemente der "Freiheitsgrad", zusätzliche Informationen, wie etwa eine Fehlermeldung, eine Warnmeldung oder dergleichen, durch Blinken des Symbols oder durch eine zum Norm(al)zustand unterschiedliche Farbgebung (etwa "rot" anstelle von "grün") zu signalisieren.

In einer zusätzlichen vorteilhaften Ausgestaltungsform der vorliegenden Erfindung kann durch die Anzeigeelemente (b) und (c) der Zustand der Erkennung des Fahrbahnrands stets dann angezeigt werden, wenn das Assistenz-/Unterstützungssystem eingeschaltet ist.

In diesem Zusammenhang ist anzumerken, daß die Anzeigeelemente (b) und (c) unter gewissen Umständen, beispielsweise bei relativ wenig auf dem Armaturenbrett zur Verfügung stehendem Platz, zu einem Anzeigeelement kombiniert bzw. vereint werden können, sei es durch mindestens eine UND-Verknüpfung oder auch durch mindestens eine ODER-Verknüpfung.

In zweckmäßiger Weise ist die Realisierung der vorbeschriebenen Anzeigeelemente durch hinterleuchtete Piktogramme möglich; alternativ oder in Ergänzung hierzu können die Anzeigeelemente mit einer größeren Flexibilität auch durch mindestens eine Matrix vorzugsweise verschiedenfarbiger, aktiv leuchtender Unterelemente, wie etwa durch mindestens einen Farbbildschirm oder durch mindestens eine LED-Matrix (LED = Light Emitting Diode), verwirklicht werden.

Bevor nachstehend weitere Ausgestaltungen, Merkmale und Vorteile der vorliegenden Erfindung anhand von Ausführungsbeispielen näher erläutert werden, wird aufgezeigt, wodurch sich der Gegenstand der vorliegenden Erfindung von bereits aus dem Stand der Technik bekannt gewordenen Gegenständen unterscheidet:

So ist in der Druckschrift FR 2 618 244 A eine Einheit für die Beobachtung und für die Aufzeichnung des Fahrverhaltens einer Person, insbesondere eines Fahrschülers, zum Zwecke der Visualisierung, der Unterstützung und der Kontrolle durch Dritte, etwa durch einen Prüfer, offenbart. Des weiteren werden dort automatisch Hinweise, etwa eine Schaltaufforderung, generiert und die Umgebung links bzw. rechts sowie der Abstand zum Vordermann aufgezeichnet.

Allerdings werden beim vorliegenden Gegenstand im Gegensatz zum Gegenstand gemäß der Druckschrift FR 2 618 244 die Eingaben eines Unterstützungssystems, nicht jedoch die Eingaben des Führers des Fortbewegungsmittels visualisiert. Des weiteren gibt die Anzeigevorrichtung gemäß der vorliegenden Erfindung keinen Hinweis darauf, inwieweit der Lenkwinkel korrigiert werden soll; vielmehr werden dem Führer des Fortbewegungsmittels durch die vorliegende Erfindung Informationen über den jeweiligen Betriebs-/Systemzustand des Assistenz/Unterstützungssystems vermittelt.

Auch beschreibt die Anzeigevorrichtung gemäß der vorliegenden Erfindung nicht den Abstand zu den Fahrbahnmarkierungen (vgl. Druckschrift FR 2 618 244), sondern signalisiert vielmehr, ob das Assistenz/Unterstützungssystem Fahrbahnmarkierungen erkannt hat. Schließlich handelt es sich bei der Anzeigevorrichtung gemäß der vorliegenden Erfindung um eine Einrichtung, die in zweckmäßiger Weise zur permanenten Installation in einem Fortbewegungsmittel vorgesehen ist und die nicht lediglich zur temporären Verwendung in ein Fortbewegungsmittel verbracht werden kann.

Aus der Druckschrift WO 00/14697 A1 ist ein System zum visuellen Signalisieren des Fahrzustands sowie der Änderung des Fahrzustands, zum Beispiel beim Verzögern ohne Bremspedalbetätigung, für andere Verkehrsteilnehmer bekannt. Im Gegensatz dazu betrifft der vorliegende Anmeldungsgegenstand die Information des Führers des eigenen Fortbewegungsmittels über den jeweiligen Betriebs-/Systemzustand eines sich an Bord befindlichen "Lane Keeping Support Systems" (= Assistenz/Unterstützungssystems).

### Kurze Beschreibung der Zeichnungen

Weitere Ausgestaltungen, Merkmale und Vorteile der vorliegenden Erfindung werden nachstehend anhand der durch die Figuren 1 bis 3 veranschaulichten drei Ausführungsbeispiele näher erläutert.

Es zeigt:
- Fig. 1: in schematischer Prinzipdarstellung ein erstes Ausführungsbeispiel einer Vorrichtung gemäß der vorliegenden Erfindung;
- Fig. 2: in schematischer Prinzipdarstellung ein zweites Ausführungsbeispiel einer Vorrichtung gemäß der vorliegenden Erfindung; und
- Fig. 3: in schematischer Prinzipdarstellung ein drittes Ausführungsbeispiel einer Vorrichtung gemäß der vorliegenden Erfindung.

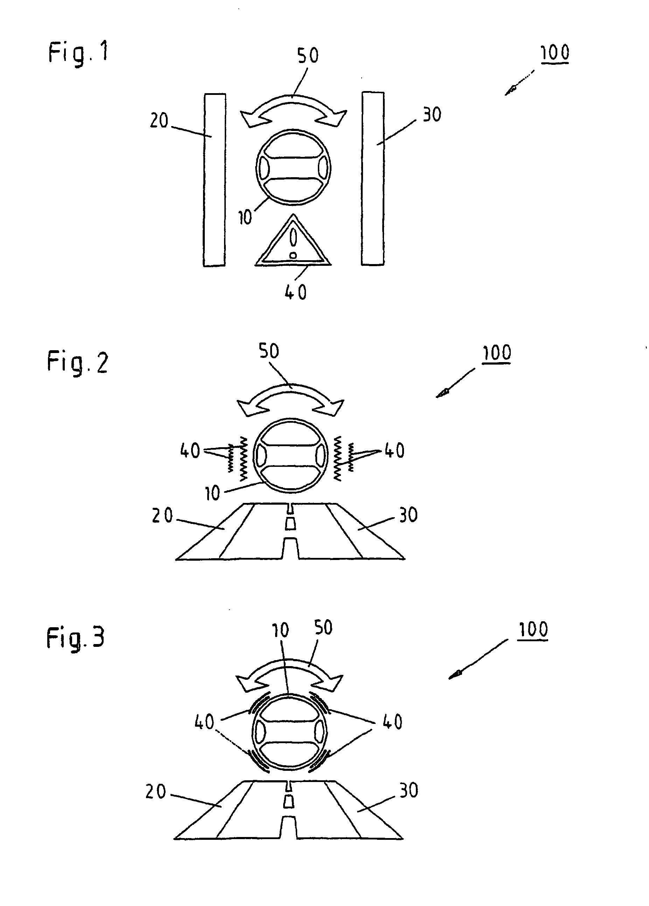

Gleiche oder ähnliche Ausgestaltungen, Elemente oder Merkmale sind in den Figuren 1 bis 3 mit identischen Bezugszeichen versehen.

### Bester Weg zur Ausführung der Erfindung

In den Figuren 1 bis 3 sind drei Ausführungsbeispiele für eine einem (in den Figuren 1 bis 3 aus Gründen der Übersichtlichkeit der Darstellung nicht gezeigten) Kraftfahrzeug zugeordnete Vorrichtung 100 dargestellt; diese Vorrichtung 100 dient dem intuitiven Erfassen der Betriebs- und Systemzustände eines auf die Querführung des Kraftfahrzeugs bezogenen Fahrassistenz-/-unterstützungssystems und weist jeweils fünf Anzeigeelemente 10, 20, 30, 40, 50 zum Anzeigen des jeweiligen Betriebsund/oder Systemzustands auf.

Hierbei ist durch das gewissermaßen als "Hauptschalter" fungierende Anzeigeelement 10 ein Symbol, nämlich ein (stilisiertes) Lenkrad, wiedergegeben, das unmittelbar mit der Lenkaufgabe, das heißt mit der Funktion des Assistenz-/Unterstützungssystems korreliert ist und vom Führer des Kraftfahrzeugs dementsprechend assoziiert wird; hierbei dient dieses Anzeigeelement 10 in erster Linie dazu, dem Führer des Kraftfahrzeugs zu signalisieren, ob das Assistenz-/Unterstützungssystem eingeschaltet ist oder nicht.

Die Anzeigeelemente 20 bzw. 30 sind hingegen auf den Betriebs/Systemzustand der Detektion der linken Markierung (→ linker Fahrbahnrand) bzw. der rechten Markierung (→ rechter Fahrbahnrand) gerichtet. Hierzu sind die Anzeigeelemente 20 bzw. 30 beim ersten Ausführungsbeispiel gemäß Figur 1 als stilisierte Fahrbahnmarkierungen (= zwei im wesentlichen vertikal ausgebildete Linien oder Streifen) links bzw. rechts vom Anzeigeelement 10 ausgebildet.

Wenn die auf den Betriebs-/Systemzustand der Detektion der linken Markierung (→ linker Fahrbahnrand) bzw. der rechten Markierung (→ rechter Fahrbahnrand) bezogenen Anzeigeelemente 20 bzw. 30 im Gegensatz dazu zu einem Anzeigeelement kombiniert werden, so wie dies beim zweiten Ausführungsbeispiel gemäß Figur 2 sowie beim dritten Ausführungsbeispiel gemäß Figur 3 der Fall ist, so erfolgt eine Ausführung als im wesentlichen trapezförmiges Straßenelement in perspektivischer Ansicht; dieses trapezförmige Straßenelement ist hierbei in den Figuren 2 und 3 unter dem Anzeigeelement 10 angeordnet.

Für das den Aktivitätszustand der Spurverlassenswarnung (= LDW = "Lane Departure Warning") betreffende Anzeigeelement 40 bietet sich in den Figuren 1 bis 3 aus Gründen der intuitiven Erfaßbarkeit für den Führer des Kraftfahrzeugs jeweils ein "warnendes" Symbol an, etwa ein Ausrufezeichen, das nach Art eines sogenannten "Wamdreiecks" in ein dreieckiges Warnschild integriert sein kann (vgl. Figur 1), oder auch ein Lautsprechersymbol.

Wie aus den Figuren 2 und 3 hervorgeht, ist auch eine symbolische Darstellung von Vibrationen am Anzeigeelement 10 (= Lenkradsymbol) denkbar, sei es durch eine akustische Rückmeldung und/oder durch eine haptische Rückmeldung an den Führer des Fortbewegungsmittels, was von der jeweiligen konkreten Umsetzung der Spurverlassenswarnung abhängig ist.

Das auf den Aktivitätszustand der Spurhalteunterstützung (= LKS = "Lane Keeping Support") bezogene Anzeigeelement 50 ist bei den drei Ausführungsbeispielen gemäß den Figuren 1 bis 3 durch ein Symbol für eine Drehung, nämlich durch einen Doppelpfeil dicht oberhalb des Anzeigeelements 10 realisiert; in erfindungswesentlicher Weise ist für das Anzeigeelement 50 auch ein Symbol für eine Rückhaltekraft denkbar, etwa in Form mindestens eines Pfeils außen neben den Anzeigeelementen 20 bzw. 30.

Zusammenfassend läßt sich also feststellen, daß durch die vorliegende, anhand der drei Ausführungsbeispiele in den Figuren 1 bis 3 exemplifizierte Erfindung ein ganzheitliches und vollständiges Konzept zur Gestaltung von Anzeigeelementen 10, 20, 30, 40, 50 eines sogenannten "Lane Keeping Support Systems" (= Fahrassistenz-/-unterstützungssystems) geschaffen ist; hierdurch wird die Vielzahl der für den Führer des Kraftfahrzeugs relevanten, durch das Fahrassistenz-/-unterstützungssystem zur Verfügung gestellten Informationen in einer kompakten, intuitiv verständlichen Weise dargestellt.

## Patentansprüche

1. Vorrichtung (100) für das Erfassen der Systemzustände einer Spurverlassenswarnung und einer Spurhalteunterstützung, die mindestens einem Fortbewegungsmittel, insbesondere mindestens einem Kraftfahrzeug, zugeordnet ist, wobei die Vorrichtung (100) mindestens ein Anzeigeelement (10, 20, 30, 40, 50) zum Anzeigen des jeweiligen Systemzustands der Spurverlassenswarnung und der Spurhalteunterstützung aufweist, wobei die folgenden Systemzustände für die Querführungsunterstützung angezeigt werden
- ausgeschaltet
- eingeschaltet, Spurverlassenswarnung und Spurhalteunterstützung nicht aktiv
- lediglich Spurverlassenswarnung aktiv
- lediglich Spurhalteunterstützung aktiv
- sowohl Spurhalteunterstützung als auch Spurverlassenswarnung aktiv.

2. Vorrichtung gemäß Anspruch 1, **dadurch gekennzeichnet, dass** die Vorrichtung (100) ein als Doppelpfeil ausgebildetes Anzeigeelement (50) zum Anzeigen der Spurhalteunterstützung aufweist.

3. Vorrichtung gemäß Anspruch 2, **dadurch gekennzeichnet, dass** die Vorrichtung (100) ein als Ausrufezeichen oder als Vibrationszeichen oder als Warndreieck ausgebildetes Anzeigeelement (40) zum Anzeigen der Spurverlassenswarnung aufweist.

4. Vorrichtung (100) gemäß mindestens einem der Ansprüche 2 bis 3, **dadurch gekennzeichnet, dass** die Vorrichtung (100) mindestens ein
- als zwei im wesentlichen vertikal ausgebildete Linien oder Streifen oder
- als mindestens ein eine Fahrbahn in perspektivischer Ansicht symbolisierendes Trapez ausgebildetes Anzeigeelement (20, 30) zum Anzeigen des mindestens eine linke Fahrbahnmarkierung und/oder mindestens eine rechte Fahrbahnmarkierung detektierenden Zustands aufweist.

5. Vorrichtung (100) nach einem der vorhergehenden Ansprüche, **dadurch gekennzeichnet, dass** die Vorrichtung (100) ein als Lenkrad ausgebildetes Anzeigeelement (10) zum Anzeigen der Funktion der Spurverlassenswarnung und der Spurhalteunterstützung aufweist.

6. Vorrichtung (100) gemäß mindestens einem der Ansprüche 1 bis 5, **dadurch gekennzeichnet, dass** das Anzeigeelement (10, 20, 30, 40, 50) als mindestens ein insbesondere hinterleuchtetes Piktogramm ausgebildet ist.

7. Vorrichtung (100) gemäß mindestens einem der Ansprüche 1 bis 6, **dadurch gekennzeichnet, dass** das Anzeigeelement (10, 20, 30, 40, 50) als mindestens eine Matrix insbesondere verschiedenfarbiger, aktiv leuchtender Unterelemente ausgebildet ist, insbesondere als ein Farbbildschirm oder als eine LED-Matrix.

8. Verwendung einer Vorrichtung nach einem der Ansprüche 1 bis 7 in einem Armaturenbrett eines Fortbewegungsmittels.

## Claims

1. Device (100) which is assigned to at least one means of locomotion, in particular at least one motor vehicle, for sensing the system states of a lane departure warning means and a lane keeping support means, the device (100) having at least one display element (10, 20, 30, 40, 50) for displaying the respective system state of the lane departure warning means and the lane keeping support means, the following system states being displayed for lateral guidance support:
- switched off;
- Switched on, lane departure warning and lane keeping support not active;
- only lane departure warning active;
- only lane keeping support active;
- both lane keeping support and lane departure warning active.

2. Device according to Claim 1, **characterized in that** the device (100) has a display element (50) which is embodied as a double arrow and has the purpose of displaying the lane keeping support means.

3. Device according to Claim 2, **characterized in that** the device (100) has a display element (40) which is embodied as an exclamation mark or as a vibration sign or as a warning triangle and has the purpose of displaying the lane departure warning.

4. Device (100) according to at least one of Claims 2 to 3, **characterized in that** the device (100) has at least one display element (20, 30) which is embodied as
- two lines or stripes which are essentially vertical or
- a display element (20, 30) which is embodied as at least one trapezium symbolizing a carriageway in a perspective view, and which has the purpose of displaying the at least one state which detects a left-hand carriageway marker and/or at least one right-hand carriageway marker.

5. Device (100) according to one of the preceding claims, **characterized in that** the device (100) has a display element (10) which is embodied as a steering wheel and has the purpose of indicating the functioning of the lane departure warning means and of the lane keeping support means.

6. Device (100) according to at least one of Claims 1 to 5, **characterized in that** the display element (10, 20, 30, 40, 50) is embodied as at least one pictogram which is in particular back-lit.

7. Device (100) according to at least one of Claims 1 to 6, **characterized in that** the display element (10, 20, 30, 40, 50) is embodied as at least one matrix, in particular with differently coloured, actively illuminated subelements, in particular as a colour screen or as an LED matrix.

8. Use of a device according to one of Claims 1 to 7 in a dashboard of a means of locomotion.

## Revendications

1. Dispositif (100) destiné à détecter les états de système d'un avertissement de sortie de trace, et d'assistance au maintien sur la trace, associé à au moins un véhicule, en particulier automobile,
le dispositif (100) possédant au moins un élément d'affichage (10, 20, 30, 40, 50) destiné à afficher l'état de système de l'avertissement de sortie de trace et d'assistance au maintien sur la trace, dans lequel pour l'assistance au guidage transversal on affiche les états de système suivants :
- avertissement de sortie de trace et assistance au maintien sur la trace non activée,
- déconnecté,
- connecté,
- seulement avertissement de sortie de trace actif,
- seulement assistance au maintien sur la trace actif,
- à la fois assistance au maintien sur la trace et avertissement de sortie de trace activés.

2. Dispositif selon la revendication 1,
**caractérisé en ce que**
le dispositif (100) comprend un élément d'affichage (50) formé d'une double flèche pour afficher l'assistance au maintien sur la trace.

3. Dispositif selon la revendication 2,
**caractérisé en ce que**
le dispositif (100) comprend un élément d'affichage (40) constitué par un symbole d'exclamation ou de vibrations ou un triangle d'avertissement, pour afficher l'avertissement de sortie de trace.

4. Dispositif (100) selon au moins une des revendications 2 à 3,
**caractérisé en ce que**
pour afficher l'état qui détecte au moins un marquage gauche de la chaussée et/ou au moins un marquage droit de la chaussée, le dispositif (100) présente au moins un élément d'affichage (20, 30) constitué par :
- deux lignes ou bandes orientées sensiblement verticalement, ou
- au moins un trapèze qui symbolise une chaussée vue en perspective.

5. Dispositif (100) selon une des revendications précédentes,
**caractérisé en ce que**
le dispositif (100) présente un élément d'affichage (10) ayant la forme d'un volant de direction, destiné à afficher le fonctionnement de l'avertissement de sortie de trace et de l'assistance au maintien de la trace.

6. Dispositif (100) selon au moins une des revendications 1 à 5,
**caractérisé en ce que**
l'élément d'affichage (10, 20, 30, 40, 50) est constitué par au moins un pictogramme, en particulier rétro-éclairé.

7. Dispositif (100) selon au moins une des revendications 1 à 6,
**caractérisé en ce que**
l'élément d'affichage (10, 20, 30, 40, 50) est constitué par au moins une matrice de sous-éléments, en particulier de différentes couleurs à éclairage actif, en particulier par un écran couleur ou une matrice DEL.

8. Emploi d'un dispositif selon l'une des revendications 1 à 7, dans un tableau de bord d'un véhicule.
